# EUROPÄISCHE PATENTANMELDUNG

(11) **EP 0 600 271 A1**
(43) Veröffentlichungstag der Anmeldung: **08.06.1994**
(21) Anmeldenummer: 93118165.5
(22) Anmeldetag: 10.11.1993
(51) Int. Cl.: H02K 5/10, H02K 7/116

(54) **Druckausgleichsanordnung für Elecktromotore mit geschlossenen Motorgehäusen**

(30) Priorität: 28.11.1992 DE 4240044
(71) Anmelder: Licentia Patent-Verwaltungs-GmbH, D-60596 Frankfurt (DE)
(72) Erfinder: Altmann, Manfred, Dipl.-Ing., D-26133 Oldenburg (DE); Oltmanns, Karl-Heinz, Dipl.-Ing., D-26123 Oldenburg (DE)
(74) Vertreter: Vogl, Leo, Dipl.-Ing.

(57) **Zusammenfassung**

Leistungsfähige Elektromotoren insbesondere zum Antrieb von Kraftfahrzeugen erfordern geschlossene Motorgehäuse, um ein Eindringen von Staub und Flüssigkeiten in das Gehäuseinnere sicher zu verhindern. Nachteilig ist hierbei allerdings, daß die aufgrund der Wärmeentwicklung entstehenden Temperaturen zu Druckschwankungen in dem Gehäuseinneren führen, welche Öl aus den Lagern für die Rotorwelle herausdrücken können. Ein hierdurch bedingter schneller Verschleiß der Lager kann zu einem schnellen Ausfall des Elektromotors führen. Dieses wird erfindungsgemäß dadurch verhindert, daß mindestens eine Öffnung (37) in dem Wandteil (11) oder Bodenteil (9) des Motorgehäuses angeordnet ist, die durch eine Abdeckung aus einem flüssigkeitsundurchlässigen und gasdurchlässigen Material verschlossen ist. Hierdurch wird ein einfacher Druckausgleich zwischen dem Gehäuseinneren des Motorgehäuses und des Getriebegehäuses oder zwischen dem Gehäuseinneren des Motorinneren des Motorgehäuses und der Außenluft erzielt. Erfindungsgemäß wird ein gleichbleibender hoher Wirkungsgrad des Elektromotors für eine lange Zeit gewährleistet, da keine sich schädlich auswirkenden Druckschwankungen mehr in dem Gehäuseinneren auftreten können.

## Beschreibung

Die Erfindung betrifft eine Druckausgleichsanordnung für Elektromotore mit geschlossenen Motorgehäusen der im Oberbegriff des Patentanspruchs 1 angegebenen Art.

Bei einer Vielzahl von technischen Anwendungen ist es erforderlich, daß die Gehäuse von Elektromotoren derart abgedichtet sind, daß ein Eindringen von Staub und/oder Wasser in das Gehäuse sicher verhindert wird. Derartig geschlossen ausgebildete Elektromotoren arbeiten störungsfrei, gewährleisten eine lange Lebensdauer und eignen sich auch vorzüglich für elektromotorisch anzutreibende Kraftfahrzeuge. Nachteilig ist bei diesen geschlossenen Elektromotoren, daß die von dem Motor abgegebene Wärme zu Temperaturschwankungen und damit zu Druckänderungen in dem Gehäuse führen. Der hierdurch erzeugte Überdruck kann sogar dazu führen, daß Öl aus den Lagern in den Lagerschilden des Motorgehäuses herausgedrückt wird. Dieses wiederum verursacht einen schnellen Verschleiß der Lager, wodurch die Lebensdauer des Motors erheblich verkürzt wird.

Die obigen durch die Druckschwankungen erzeugten Probleme hat man versucht, mittels eines Ventilsystems zu lösen. Durchgehend geöffnete Ventile haben jedoch den Nachteil, daß bei bestimmten Einbaulagen des Gehäuses durch die Öffnung Öl austritt, was aus Umweltgründen heutzutage nicht mehr tolerierbar ist. Überdruckventile können die vorhandenen Probleme auch nur zum Teil lösen. Sie verhindern zwar das Austreten z. B. von Öl, aber sie ermöglichen keine Begasung bei Unterdruck etwa nach Abkühlung des Gehäuses. Weiterhin sind zweiseitig wirkende Ventile zwar denkbar, fordern aber einen hohen Kostenaufwand, so daß man sich meistens mit weniger anspruchsvollen Ventillösungen begnügt.

Der Erfindung liegt nun die Aufgabe zugrunde, eine Druckausgleichsanordnung für Elektromotore mit geschlossenen Gehäusen zu schaffen, mit deren Hilfe Temperaturänderungen im Gehäuse nicht zu schädlichen Druckänderungen im Gehäuse führen. Diese Aufgabe wird durch die im Patentanspruch 1 gekennzeichneten Merkmale gelöst.

Die erfindungsgemäße Druckausgleichsanordnung ermöglicht mit einfachen und billigen Mitteln einen Druckausgleich zwischen dem Innenraum des Motorgehäuses mit dem Innenraum des Getriebegehäuses und/oder der Außenluft. Die Bodenteile der Motorgehäuse und/oder die Wandteile zwischen den Motorgehäusen und den Getriebegehäusen werden lediglich mit Öffnungen versehen, welche durch Abdeckungen aus flüssigkeitsundurchlässigen und gasdurchlässigen Materialien einfach verschlossen werden. In vorteilhafter Ausgestaltung besteht die Abdeckung aus einer temperatur- und chemikalienbeständigen PTFE-Membran. Durch eine entsprechende Wahl der Porenweite dieser PTFE-Membran sind die Luftdurchlässigkeit und die Flüssigkeitsundurchlässigkeit den gewünschten Bedingungen leicht anzupassen.

Weitere vorteilhafte Ausgestaltungen des Erfindungsgegenstandes sind den weiteren Unteransprüchen zu entnehmen. Die Erfindung wird anhand eines Ausführungsbeispiels im folgenden näher beschrieben. Es zeigen:
- Figur 1: einen Schnitt durch einen geschlossenen Elektromotor und
- Figur 2: eine Einzelheit aus Figur 1.

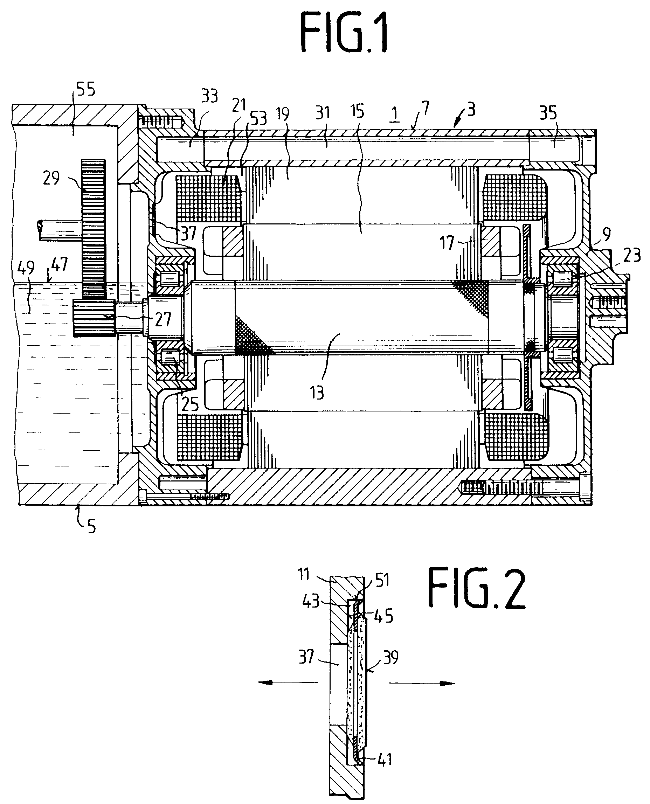

Die Figur 1 zeigt einen Elektromotor 1 mit einem geschlossenen Motorgehäuse 3 und einem daran befestigten Getriebegehäuse 5, insbesondere einen Asynchronmotor für elektromotorisch anzutreibende Kraftfahrzeuge. Das Motorgehäuse 3 besteht aus einem zylindrischen Gehäusemantel, dessen beide Stirnseiten einerseits durch ein Bodenteil 9 und andererseits durch ein Wandteil 11 derart abgedichtet sind, daß Staub und/oder Flüssigkeiten nicht in das Gehäuseinnere eindringen können. Das Motorgehäuse 3 enthält einen leistungsfähigen Motor mit einer Rotorwelle 13, einem Rotor 15, Kurzschlußringen 17, einem Stator 19 und mit Statorwickelköpfen 21. Die Rotorwelle 13 ist mittels Lager 23, 25 in dem Bodenteil 9 und in dem Wandteil 11 drehbar gelagert. Diese Lager 23, 25 bestehen z. B. aus Wälzlagern. Das antriebsseitige Ende der Rotorwelle 13 ist mit 27 bezeichnet und ist als Antriebsritzel ausgebildet, welches mit einem Zahnrad 29 eines nicht näher dargestellten Getriebes in dem Getriebegehäuse 5 in Eingriff steht. Übrigens weist der aus Metall bestehende zylindrische Gehäusemantel 7 in Umfangsrichtung gleichmäßig verteilt und achsensymmetrisch zum Rotor 15 bzw. Stator 19 angeordnete Längskanäle 31 auf, welche über Verbindungskanäle 33, 35 in dem Bodenteil 9 und in dem Wandteil 11 flüssigkeitsleitend derartig miteinander in Verbindung stehen, daß die Kühlflüssigkeit den zylindrischen Mantel 7 mäanderförmig durchläuft. Obwohl hierdurch eine schnelle und wirkungsvolle Wärmeabführung aus dem Gehäuseinneren erzielt wird, kommt es dennoch zu Temperatur- und damit zu Druckschwankungen in dem geschlossenen Motorgehäuse 3, die sich schädlich auswirken können. So kann z. B. Öl aus den Lagern 23, 25 herausgedrückt werden. Dieses wiederum führt zu einem schnellen Verschleiß dieser Lager 23, 25 und damit zu einem frühen Ausfall des Elektromotors 1, wenn das Wellenende der Rotorwelle 13 auch das Bodenteil 9 durchdringt. Dieses wird erfindungsgemäß nun dadurch vermieden, daß mindestens eine Öffnung 37 in dem Wandteil 11 angeordnet ist, die durch eine Abdeckung aus einem flüssigkeitsundurchlässigen und gasdurchlässigen Material verschlossen ist. Diese Abdeckung besteht aus einer PTFE-Membran 39 mit einer antiadhäsiven Oberfläche. Diese PTFE-Membran ist in einem Rahmen- oder ringförmigen Einpreßteil 41 ausgespannt angeordnet, welches als Druckausgleichselement in die Öffnungen 37 des Wandteils 11 einpreßbar ist. Die Verbindung der PTFE-Membran 39 mit dem Wandteil 11 erfolgt in einfacher Weise dadurch, daß das Wandteil 11 eine sacklochartige Vertiefung 43 aufweist, in deren Bodenfläche 45 die aus einer Durchgangsbohrung bestehende Öffnung 37 zentrisch angeordnet ist und in die das Einpreßteil 41 eindrück- und verrastbar ist. Da der Außenrand des Einpreßteiles 41 nachgiebig ausgebildet ist, wird eine flüssigkeitsdichte Verbindung des Einpreßteiles 41 mit dem Wandteil 11 erzielt. Im Rahmen der Erfindung könnte der Außenumfang 51 der Vertiefung 43 eine Rändelung aufweisen, durch die ein noch besserer Festsitz des Einpreßteiles 41 in der Vertiefung 43 gewährleistet wird.

Durch die gasdurchlässige Membran 39 wird auf einfachste Weise ein Druckausgleich zwischen den Innenräumen 53, 55 in dem Motorgehäuse 3 und in dem Getriebegehäuse 55 derart erzielt, daß kein Öl aus den Lagern 23, 25 bei Temperaturerhöhungen in dem Motorgehäuse 3 möglich ist. Hierdurch wird eine lange Lebensdauer des leistungsstarken und kompakt ausgebildeten Elektromotors 1, insbesondere bei einem Einsatz in Kraftfahrzeugen erzielt. Gleichzeitig wird auch ein Eindringen von Flüssigkeiten und/oder Staub in das Gehäuseinnere 53 des Motorgehäuses 3 sicher verhindert.

Im Rahmen der Erfindung ist es selbstverständlich auch möglich, daß das Bodenteil 9 mit Öffnungen versehen wird, welche ebenfalls durch eine Abdeckung aus einer PTFE-Membran mit einer antiadhäsiven Oberfläche verschlossen werden. Falls erforderlich, können die Öffnungen auch sowohl in dem Bodenteil 9 als auch in dem Wandteil 11 angeordnet werden. Hierdurch wird auch bei einer Abkühlung des Motorgehäuses 3 gewährleistet, daß kein Unterdruck in dem Gehäuseinneren 53 des Motorgehäuses 3 entsteht.

Weiterhin sind die durch die Druckausgleichselemente verschlossenen Öffnungen 37 in dem Bodenteil 9 und/oder in dem Wandteil 11 oberhalb des Flüssigkeitspegels 47 in dem Getriebegehäuse 5 angeordnet. Hierdurch wird auch eine Begasung des Motorgehäuses 3 bei Unterdruck, der bei Abkühlung des Gehäuses 3 einschließlich der anderen Bauteile auftreten kann, sicher gewährleistet. Da schädlich sich auswirkende Druckänderungen sicher vermieden werden, wird eine lange Lebensdauer des Elektromotors gewährleistet.

## Patentansprüche

1. Elektromotor mit einem geschlossenen Motorgehäuse und einem daran befestigten Getriebegehäuse, insbesondere ein Asynchronmotor für elektromotorisch anzutreibende Kraftfahrzeuge, wobei das Motorgehäuse aus einem zylindrischen Gehäusemantel besteht, dessen beide Stirnseiten einerseits durch ein Bodenteil und andererseits durch ein Wandteil, an welchem das Getriebegehäuse befestigt ist, abgedichtet sind, **dadurch gekennzeichnet,** daß mindestens eine Öffnung (37) in dem Wandteil (11) und/oder in dem Bodenteil (9) angeordnet ist, die durch eine Abdeckung aus einem flüssigkeitsundurchlässigen und gasdurchlässigen Material verschlossen ist.

2. Elektromotor nach Anspruch 1, **dadurch gekennzeichnet,** daß die Abdeckung aus einer PTFE-Membran (39) mit einer antiadhäsiven Oberfläche besteht.

3. Elektromotor nach Anspruch 2, **dadurch gekennzeichnet,** daß die PTFE-Membran (39) in einem Rahmen oder ringförmigen Einpreßteil (41) ausgepannt angeordnet ist, welches als Druckausgleichselement in die Öffnungen 37 des Wand(11) und/oder des Bodenteiles (9) einpreßbar ist.

4. Elektromotor nach Anspruch 3, **dadurch gekennzeichnet,** daß das Bodenteil (9) und/oder das Wandteil (11) sacklochartige Vertiefungen (43) aufweisen, in deren Bodenflächen (45) die aus Durchgangsbohrungen bestehenden Öffnungen (37) zentrisch angeordnet sind und in die die Einpreßteil (41) eindrück- und verrastbar sind.

5. Elektromotor nach Anspruch 4, **dadurch gekennzeichnet,** daß die durch die Druckausgleichselemente verschlossenen Öffnungen (37) in dem Bodenteil (9) und/oder in dem Wandteil (11) oberhalb des Flüssigkeitspegels (47) in dem Getriebegehäuse (5) angeordnet sind.
